# EUROPEAN PATENT SPECIFICATION

(11) **EP 3 689 162 B1**
(45) Date of publication and mention of the grant of the patent: **29.07.2026**
(21) Application number: 17927026.9
(22) Date of filing: 23.10.2017
(51) Int. Cl.: A24D 1/20, A24D 1/00, A24D 3/04

(54) **HEAT-NOT-BURN CIGARETTE HAVING CAVITY CONTAINER SECTION**
ZIGARETTE MIT ERWÄRMUNG OHNE VERBRENNUNG MIT HOHLRAUMBEHÄLTERABSCHNITT
CIGARETTE À CHAUFFAGE SANS COMBUSTION AYANT UNE SECTION DE RÉCIPIENT À CAVITÉ

(30) Priority: 26.09.2017 CN 201710880890
(43) Date of publication of application: 05.08.2020
(73) Proprietor: Nantong Cigarette Filter Co., Ltd., Chongchuan District Nantong, Jiangsu 226014 (CN)
(72) Inventor: TANG, Wei, Nantong Jiangsu 226001 (CN); TANG, Rongcheng, Nantong Jiangsu 226001 (CN); ZHOU, Chengxi, Nantong Jiangsu 226001 (CN); QIN, Changfeng, Nantong Jiangsu 226001 (CN); LUO, Liang, Nantong Jiangsu 226001 (CN)
(74) Representative: Ipsilon
(86) International application number: PCT/CN2017/107271
(87) International publication number: WO 2019/061606

(56) References cited:
- WO-A1-2016/181843
- CN-A- 103 355 742
- CN-A- 103 987 286
- CN-A- 104 010 531
- CN-A- 107 087 811
- US-A- 5 183 062
- US-A1- 2008 185 011
- US-B1- 6 814 786

## Description

### Technical Field

The present invention relates to electrically heated tobacco products, and more specifically relates to a heat-not-burn cigarette having cavity container section and smoke generation materials.

### Background Art

In recent years, the tobacco industry has developed a kind of electrically heated tobacco product (heat-not-burn tobacco product), generally comprising an electrical heating system (heater) and tobacco (tobacco stick). The electrical heating system comprises a heating component, and the tobacco stick contains smoke generation materials (also known as smoke generating agent, aerosols formation agent). When the tobacco stick is placed inside the electrical heating system, the electrical heating system allows the heating component to be electrically connected with a power source so that the heating component produces heat, thus heating up the smoke generation materials in the tobacco stick. When the smoke generation materials are heated up to a temperature that produces smoke, smoke is produced for smoker to inhale. Heated tobacco product can reduce harmful substances in the smoke produced by actual burning and thermal decomposition of tobacco, as in the case of traditional cigarette.

Electrically heated tobacco products having smoke generation materials now available in the market have the following defects:
1. Since the smoke generation materials in the tobacco stick can absorb water, for example water in the air, the amount of water in the smoke generation materials in the tobacco stick will increase. Hence, due to water absorption by the smoke generation materials, the outer wrapping material of the tobacco stick may be polluted or deformed by the high water content inside.
2. Smoke generated by electrically heated tobacco products is relatively high, however, the cooling materials cannot provide effective cooling. Therefore, when smoker inhales the smoke, the smoker may have a burning feel which negatively affects user's experience.
3. Insufficient choice of flavor.
4. Insufficient strength and aroma of the smoke.

Also, due to increase in demand and more demanding requirements from consumers, a heat-not-burn cigarette having more functions is needed to fulfil different demands from the consumers.

US 2008/185011 A discloses a kind of cigarette comprising: a tobacco rod; a sealed filter adjacent to a downstream end of the tobacco rod, wherein the sealed filter comprises a housing with a stepped inner profile; a cavity within the housing; a first film sealing an upstream end of the cavity on a first step of the stepped inner profile; and a second film sealing a downstream end of the cavity on a second step of the stepped inner profile, wherein the cavity is located between the first film and the second film sealing a downstream end of the cavity; and tipping paper attaching the tobacco rod to the sealed filter. Additives are sealed within the sealed filters.

### Disclosure of the Invention

In view of the aforesaid disadvantages now present in the prior arts, the present invention provides a heat-not-burn cigarette having cavity container section according to claim 1. The present invention can provide a wide collection of flavors and other specific functions to meet different requirements of the consumers.

A heat-not-burn cigarette, comprising a tobacco section, a cavity container section and a mouthpiece connected sequentially and co-axially, and an outer wrapping material that limits the tobacco section, the cavity container section and the mouthpiece; the tobacco section contains smoke generation materials; the cavity container section has multiple container parts, each having a cavity, container parts that are removably connected to one another; each container part has a substantially cylindrical shape, each container part has one end along an axial direction thereof being an opening, and another end along the axial direction thereof being a bottom wall or end surface, the cavity container section has air holes to allow air to flow through the cavity container section along a direction upstream and downstream of the heat-not-burn cigarette, the air holes are provided at two side surfaces of the multiple-cavity container section and at each wall separating two adjacent cavities.

Preferably, the multiple cavities of the cavity container section are filled with one or combinations of water, flavored liquids, aroma beads and cooling materials.

Preferably, the cavity container section is made of food-grade plastics, biodegradable plastics or whole plant extract materials.

Preferably, the tobacco section has a core and compound aluminum foil shaping paper or grease proof shaping paper wrapping around the core. Preferably, the compound aluminum foil shaping paper has a compound layer structure, having an inner layer being aluminum foil, and an outer layer being a shaping paper; the inner layer and the outer layer are adhered together to form the compound layer structure.

Preferably, the core of the tobacco section is produced from reconstituted tobacco leaves, native tobacco or coated paper material.
Preferably, the core of the tobacco section is added with one or combinations of tobacco extract, granular or powder form of tobacco, and aroma essence.

Preferably, the core of the tobacco section is made from reconstituted tobacco leaves, native tobacco or coated paper material, chopped into thin and elongated strips gathered as a bundle orienting along the axial direction of the heat-not-burn cigarette.

Preferably, smoke generation materials comprise polyols and a mixture thereof; the polyols comprise propylene glycol, triethylene glycol, butylene glycol, and glycerol.

Preferably, a core of the mouthpiece is made of acetate fiber material.

Preferably, the mouthpiece is also provided with aroma enhancement element.

Preferably, the aroma enhancement element is liquid filled balls, or particles or powder materials that contain the aroma of tobacco itself or other kinds of aroma.

Preferably, the mouthpiece is solid, or a tubular element having a through hole along an axial direction thereof.

Preferably, the through hole of the mouthpiece has a cross section of a circular shape, a toothed gear shape or other shapes.

Preferably, additional supporting sections or functional sections are provided between the tobacco section and the cavity container section and/or between the cavity container section and the mouthpiece; the tobacco section, the cavity container section, the mouthpiece, and all the inserted additional supporting sections or functional sections are connected end to end co-axially.

The present invention has the following beneficial advantages:
1. According to the heat-not-burn cigarette of the present invention, materials inside the multi-cavity container section enables the cigarette to have good cooling property, so that smoker will not have a feel of burning during smoking.
2. According to the heat-not-burn cigarette of the present invention, the multi-cavity container section can diversify and enrich the flavors of the cigarette so that the smoke is strong and its flavor is rich.
3. According to the heat-not-burn cigarette of the present invention, the use of compound aluminum foil shaping paper on the tobacco section can prevent pollution and deformation of the outer wrapping material caused by absorbed water from air in the core.
4. By filling in water or other flavored liquids in a middle cavity of a multi-cavity container section, temperature and chokiness of the smoke can be reduced such that the smoke is lighter and softer. Also, user's experience resembling smoking through a hookah can be provided to smoker.
5. Since the heat-not-burn cigarette does not require ignition, thereby greatly reducing the amount of harmful substances in the smoke caused by burning tobacco in a traditional cigarette. Therefore, the heat-not-burn cigarette of the present invention is safer and healthier.

### Brief Description of Drawings

FIG. 1 is an axial sectional view showing an example structure. FIG. 2(a) is an axial sectional view of an example single cavity container section.
FIG. 2(b) is an axial sectional view of the multiple-cavity container section embodied according to an embodiment of the present invention.
FIG. 3 is an axial sectional view of a three-cavity container section.
FIG. 4 is a bottom structural view of a container part.
FIG. 5 is an unfolded view of the core of the tobacco section.
FIG. 6 is an axial sectional view showing another example structure.
FIG. 7 is an end view showing a solid mouthpiece.
FIG. 8 is an end view showing a hollow mouthpiece.

The embodiments of the present invention will be described below with reference to the drawings. It should be noted that, the embodiments described below are not exhaustive, meaning that they are not the exclusive embodiments of the present invention. The embodiments below are intended to clearly explain the solutions provided by the present invention, and the present invention should not be limited by the described embodiments. A person skilled in this field of art should be aware that, various changes and alterations can be made in accordance with the teachings provided by the embodiments.

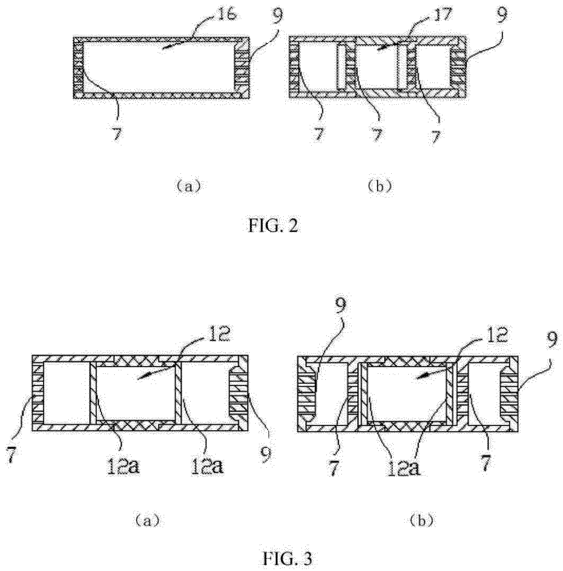

The reference numbers contained in the drawings refer to the following components:
1-tobacco section; 2-compound aluminum foil shaping paper; 3- cork tipping paper; 4-solid mouthpiece; 5-outer wrapping material; 6-multi-cavity container section; 7-bottom wall; 8-thin and elongated strips; 9-cap; 10-end surface of solid mouthpiece; 11-end surface of hollow mouthpiece (having toothed gear shape through hole); 12-three-cavity container section of FIG. 3; 12a-films; 13-hollow mouthpiece; 14-end surface of hollow mouthpiece (having circular through hole); 16-single cavity container section; 17-three-cavity container section of FIG. 2.

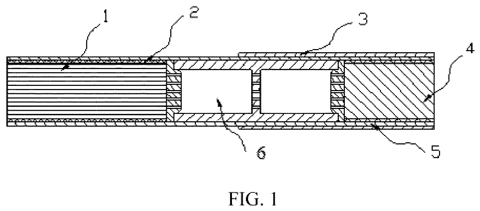

The embodiments related to the descriptions of Fig. 1, Fig. 2 (a), Fig. 3 and Fig. 6 are not part of the invention but are considered as useful for understanding the invention.

The heat-not-burn cigarette of the present invention is used together with a tobacco heater. When the heat-not-burn cigarette is inserted into the tobacco heater and is being heated, aroma and smoke are released for smoker to inhale.

FIG. 1 is an axial sectional view showing an example structure. As shown in FIG. 1, the heat-not-burn cigarette comprises tobacco section 1, a multiple-cavity container section 6, a mouthpiece 4 sequentially connected co- axially, and an outer wrapping material 5 that limits the tobacco section 1, the multiple-cavity container section 6 and the mouth piece 4.

The heat-not-burn cigarette of the present invention has two ends, namely an upstream end and a downstream end. "upstream" and "downstream" are positional references to describe the relative positions of various components or elements of the cigarette with reference to the direction of
inhaling the smoke produced by the cigarette during use. During use, smoker inhales the smoke at the downstream end, and the aroma and smoke produced by the cigarette flow from the upstream to the downstream for the smoker to inhale.

The multiple-cavity container section 6 is positioned downstream adjacent to the tobacco section 1. The multiple-cavity container section 6 can be formed by any suitable material or combination of materials. The materials making the multiple-cavity container section 6 are preferably food-grade plastics, biodegradable plastics or whole plant extract materials, wherein food-grade plastics or biodegradable plastics can be PLA (Polylactic acid), PHA (Polyhydroxyalkanoates), PCL (polycaprolactone), carbon dioxide copolymer, water soluble PVA (Polyvinyl alcohol), PE (Polyethylene), PP (Polypropylene), and PBS (polybutylene succinate) etc, which are very safe to human body.

Preferably, the multiple-cavity container section 6 is a plastic component substantially having a cylindrical shape. Since a middle section of the cigarette is the major section where smoker grips the cigarette, the middle section of the cigarette requires a certain supporting strength, so that smoker can grip the cigarette comfortably. As said, since the multiple-cavity container section 6 is a plastic component substantially having a cylindrical shape, the multiple-cavity container section can provide suitable supporting strength to enable comfortable gripping of the cigarette. Even if the gripping strength is strong, the cigarette will not be deformed or broken. Besides, the plastic materials making the multiple-cavity container section 6 can absorb a certain amount of heat, therefore when smoke and aroma of high temperature (200-350°C) from the tobacco section 1 pass through the multiple-cavity container section 6, certain cooling effect can be achieved, so that when aroma and smoke reach the mouth of the smoker, the burning feel will be reduced or eliminated, thereby enhancing the user's experience.

The multiple-cavity container section 6 is a container having multiple cavities. FIG. 1 shows an embodiment having two cavities. In some other embodiments like FIG. 2(b), there can be three cavities form a three- cavity container section 17. In examples which are not encompassed by the claims, the multiple-cavity container section can be modified as a single cavity container section 16 as shown in FIG. 2(a) according to practical needs.

The multiple -cavity container section 6 comprises more than one air hole so that air can flow through the multiple-cavity container section along a direction between the upstream end and the downstream end. Specifically, in case of a single cavity container section, the air holes can be provided at two side surfaces (upstream side surface and downstream side surface) of the single cavity container section, so that air can pass through the single cavity container section. In case of multiple-cavity container section according to the invention, the air holes are provided at two side surfaces (upstream side surface and downstream side surface) of the multiple-cavity container section and at each wall separating two adjacent cavities, therefore air can pass through all the cavities and flow freely along the upstream-downstream direction.

The cavities of the multiple-cavity container section 6 can be filled with water, flavored liquids, aroma beads and one or more than one kind of cooling materials, so as to fulfil the consumer's different demands. Flavored liquids can be any one or combinations of menthol essence, apple essence, rose essence, peach essence and dried tangerine peel (Chenpi in Chinese) essence etc. When beads are filled into the cavities, the air holes of the multiple-cavity container section have diameters smaller than diameters of the beads being filled in, so that the beads will not fall out from the air holes. When a single cavity container section is used, the aroma beads and the cooling materials can be put together in the single cavity. When the multiple-cavity container section is used, the aroma beads and the cooling materials can be put into different cavities.

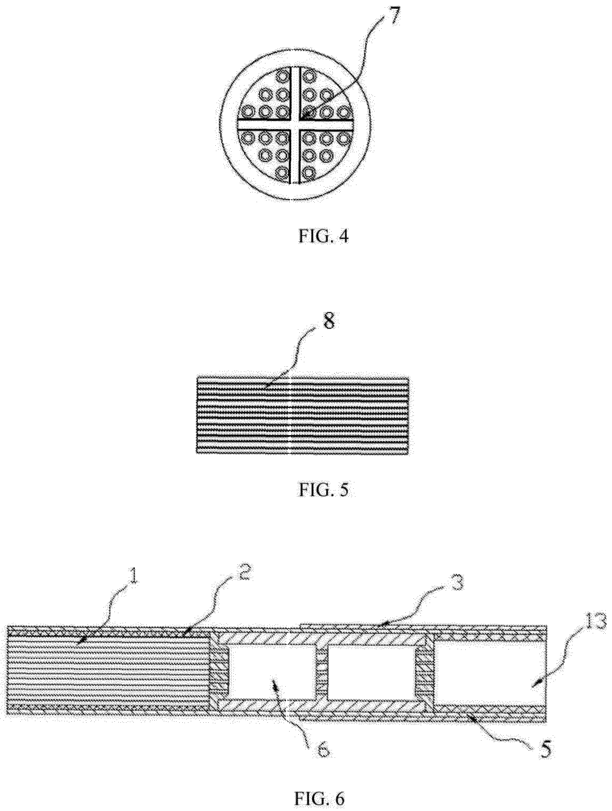

For easier filling of water, flavored liquids, or beads of various functions including aroma beads, the multiple-cavity container section 6 comprises multiple cavities (container parts each having a cavity) that are removably connected to one another. Each container part has a substantially cylindrical shape. Each container part has one end along an axial direction thereof being an opening, and another end along the axial direction thereof being a bottom wall or end surface (therefore, each container part has a shape like a cup). For example, in case of two cavities, a first container part having a first cavity and a second container part having a second cavity are mutually fixed via buckling means; specifically, a bottom wall of the first container part is inserted to an opening of the second container part, and then fixedly connected together by buckling means. The bottom wall 7 of the first container part is a stepped portion of the first container part and has an outer diameter slightly smaller than an inner diameter of the opening of the second container part, such that the stepped portion can be inserted to the opening of the second container part. An opening of the first container part is provided with a cap 9. Likewise, the cap 9 also has a stepped portion, whose outer diameter is slightly smaller than an inner diameter of the opening of the first container part, such that the stepped portion of the cap 9 can be inserted to the opening of the first container part and fixedly connected via buckling means. Therefore, a two- cavity container section can be obtained. A three-cavity container section or any container section having more than three cavities can be configured analogously with reference to the two-cavity container section. FIG. 4 shows the bottom wall 7 of a container part. The cross ( "+" ) in the middle of the bottom wall is a reinforcement rib, and the circles refer to the air holes. Likewise, the cap 9 also has the structure shown in FIG. 4.

Preferably, as shown in FIG. 3(a), in the multi-cavity container section 6, one cavity can be specified for filling in water, for example, a middle cavity in case of a three-cavity container section 12, so that the heat-not-burn cigarette can mimic the user's experience of smoking through a hookah. In this embodiment, two ends of this middle cavity along an axial direction of the heat-not-burn cigarette are provided with films 12a respectively that are air-permeable but liquid (water)-impermeable. Examples of the films 12a can be polytetrafluoroethylene (PTFE) films, thermoplastic polyurethane films, or polyethylene films. Since this middle cavity is filled with water, when smoker inhales through the heat-not-burn cigarette, smoke and aroma in the heat-not-burn cigarette will flow from upstream to downstream passing through the middle cavity filled with water, therefore achieving the user's experience of smoking through a hookah. Also, water may reduce the temperature and chokiness of the smoke so that the smoke being inhaled is lighter and softer. In other embodiments, water in the middle cavity may be replaced by replaced by flavored liquids.

FIG. 3(b) is a variation of the embodiment shown in FIG. 3(a). In FIG. 3(b), the cavity adjacent to each side of the middle cavity has the bottom wall 7 and the cap 9. The bottom wall 7 of each cavity adjacent to each side of the middle cavity is recessed inwardly towards the respective cavity so that each side of the middle cavity is received in the recessed portion of the corresponding cavity, thereby forming a three-cavity container section. Since when the heat-not-burn cigarette is positioned vertically, water in the middle cavity creates pressure to the film due to its own weight, and this may damage the film and affect the service life of the heat-not-burn cigarette. By providing the bottom wall 7 to each cavity adjacent to the middle cavity, films disposed at both ends of the middle cavity can be supported, therefore the films will not be damaged by the weight of water.

Further, the cavity upstream and adjacent to the middle cavity in the embodiment of three-cavity container section 12 can be filled with aroma beads, and the cavity downstream and adjacent to the middle cavity can be filled with cooling materials. Preferably, the aroma beads may contain particles or powder that contain the aroma of tobacco itself or other kinds of aroma. Particles or powder that contain the aroma of tobacco itself are produced by applying a solvent formulated by blending Yunnan tobacco absolute, Zimbabwe tobacco absolute, Megastigmatrienone, methylcyclopentenolone, damascenone, ionone, and dihydroactinidiolide etc. to particles or powder of tobacco leaves and stems. Particles or powder that contain other aroma are produced by applying a solvent formulated by blending one or combinations of menthol essence, apple essence and rose essence etc. to particles or powder of tobacco leaves and stems.

Preferably, the cooling materials can be polyethylene glycol (PEG8000) or salts with crystal water.

Preferably, the multi-cavity container section has a thickness of 0.5mm, and the diameter of each air hole is 0.5mm.

Preferably, the multi-cavity container section 6 has an outer diameter that is similar or identical to an outer diameter of the tobacco section.

Preferably, the outer diameter of the multi-cavity container section 6 is at least 5mm, and may be around 5mm to 10mm, specifically between around 6mm to 8mm. In a preferred embodiment, the outer diameter of the multi-cavity container section 6 is 7mm +/- 10%.

The multi-cavity container section 6 has a length of around 5mm to 30mm. In a preferred embodiment, the length of the multi-cavity container section 6 is around 15 to 20mm.

When a heating component of the tobacco heater is inserted with the tobacco section 1 of the heat-not-burn cigarette of the present invention, the user has to apply a certain amount of force to overcome the resistance experienced during insertion, but this may damage the tobacco section of the heat-not-burn cigarette and/or the heating component of the tobacco heater.

Further, the force applied during insertion of the tobacco section of the heat-not-burn cigarette to the heating component of the tobacco heater may cause the movement of the tobacco section, resulting in incomplete insertion of the tobacco section into the heating component of the tobacco heater, thereby leading to uneven and inefficient heating of the tobacco section.

In a preferred embodiment, the multi-cavity container section 6 is configured to prevent the tobacco section to move towards the downstream during its insertion to the heating component of the tobacco heater, and this ensures complete insertion of the tobacco section into the heating component of the tobacco heater, thus preventing uneven and inefficient heating of the tobacco section. Also, the multi-cavity container section is configured to have an air flow channel that when smoker inhales through the heat-not-burn cigarette, smoke and aroma flow from upstream to downstream through the air flow channel.

The tobacco section 1 is disposed at the upstream end of the heat-not-burn cigarette. The tobacco section 1 may comprise a core and compound aluminum foil shaping paper 2 wrapping around the core.

Specifically, the compound aluminum foil shaping paper 2 has a compound layer structure, having an inner layer being aluminum foil, and an outer layer being a shaping paper. The inner layer and the outer layer are adhered together by using for example adhesive to form the compound layer structure. The use of compound aluminum foil shaping paper 2 on the tobacco section can prevent pollution and deformation of the outer wrapping material caused by absorbed water from air in the smoke generation materials. In another embodiment, the compound aluminum foil shaping paper 2 can be replaced by grease proof shaping paper.

Preferably, the core of the tobacco section 1 is produced from reconstituted tobacco leaves, native tobacco or coated paper material. When the tobacco section 1 is heated up, smoke and aroma will be generated to provide the taste that resembles the taste of smoking a traditional cigarette. Specifically, the core of the tobacco section 1 is made from reconstituted tobacco leaves, native tobacco or coated paper material, chopped into thin and elongated strips gathered as a bundle orienting along the axial direction of the heat-not-burn cigarette. The thin and elongated strips have substantially flat surfaces, and the "axial direction" of the heat-not-burn cigarette refers to the direction running along the upstream end and the downstream end of the heat-not-burn cigarette.

FIG. 5 is the unfolded view of the core of the tobacco section. The core of the tobacco section 1 comprises thin and elongated strips 8 gathered as a bundle orienting along the axial direction of the heat-not-burn cigarette. "thin and elongated strips" indicate that each strip has a length substantially greater than its width and thickness. "gathered" indicate that the strips are arranged and put together as a bundle orienting substantially parallel to the axial direction of the heat-not-burn cigarette.

Compared with traditional cigarette which contains fragmented tobacco, the thin and elongated strips 8 (thin and elongated strips of tobacco) of the heat-not-burn cigarette of the present invention can greatly reduce the risk of loosened end portion as in the traditional cigarette. As known, a loosened end portion in the traditional cigarette is a result of fragmented tobacco falling out from the end portion. In case of heat-not-burn cigarette, a loosened end portion may lead to the need of frequent cleaning of the tobacco heater when the heat-not-burn cigarette is used with the tobacco heater, thereby affecting the service life of the tobacco heater.

Further, when a cigarette having fragmented tobacco is inserted into or removed from the heating component of the tobacco heater, the tobacco fragments will move, thus undesirably causing the need of frequent cleaning of the heating component of the tobacco heater to clean away the tobacco fragments. By contrast, when the heat-not-burn cigarette having thin and elongated strips of tobacco is inserted into or removed from the heating component of the tobacco heater, the thin and elongated strips of tobacco advantageously will not move.

Besides, a thin and elongated strip of a specific length will have its weight determined by its density, width and thickness. Therefore, the weight of the heat-not-burn cigarette having the tobacco section containing thin and elongated strips of a specific length gathered as a bundle can be adjusted by adjusting the density, width and thickness of the strips. As such, the problem of weight inconsistency between cigarettes having the same dimensions can be alleviated. Compared with cigarettes containing fragmented tobacco, a ratio of manufactured heat-not-burn cigarettes according to the present invention deviated from the range of acceptable weight is reduced.

The core of the tobacco section 1 is added with one or combinations of tobacco extract, granular or powder form of tobacco, and aroma essence. The tobacco extract includes but not limited to Yunnan tobacco absolute, Zimbabwe tobacco absolute, Megastigmatrienone, methylcyclopentenolone, damascenone, ionone, and dihydroactinidiolide etc. Aroma essence includes but not limited to one or combinations of menthol essence, apple essence and rose essence. Also, the core is made into a form of strip material by means of paper making technique. In the present invention, the materials in the core do not include smoke generation materials/smoke generating agents. According to prior art, known smoke generation materials include but not limited to polyols and a mixture thereof. Examples of polyols include propylene glycol, triethylene glycol, butylene glycol, and glycerol etc.

Preferably, the tobacco section 1 has an outer diameter of at least 5mm, and may be around 5mm to 10mm, specifically between around 6mm to 8mm. In a preferred embodiment, the outer diameter of the tobacco section 1 is 7mm +/-10%.

The tobacco section 1 can have a length of around 10mm to 22mm. In an embodiment, the tobacco section can have a length of around 15mm. In a preferred embodiment, the tobacco section has a length of around 18mm.

Preferably, the tobacco section 1 has substantially a cylindrical shape.

The mouthpiece 4 is disposed downstream adjacent to the multi-cavity container section 6, specifically at the downstream end of the heat-not-burn cigarette. The mouthpiece 4 comprises a core and a shaping paper wrapping the core. Preferably, the core of the mouthpiece 4 is made of acetate fiber material. Preferably, the mouthpiece 4 has an outer diameter which is similar or identical to the outer diameter of the tobacco section.

The mouthpiece 4 has an outer diameter of at least 5mm, and may be around 5mm to 10mm, specifically between around 6mm to 8mm. In a preferred embodiment, the outer diameter of the mouthpiece 1 is 7mm +/- 10%.

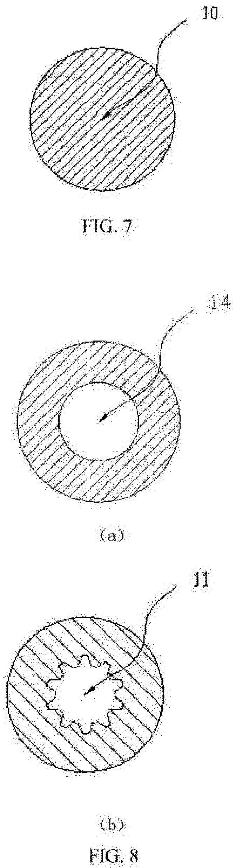

The mouthpiece 4 can have a length of around 5mm to 20mm. In a preferred embodiment, the length of the mouthpiece 4 is around 10 to 15mm. In the embodiment shown in FIG. 1, the mouthpiece 4 is solid. FIG. 7 shows an end surface 10 of a solid mouthpiece.

Preferably, the mouthpiece 4 may also be provided with aroma enhancement element. The aroma enhancement element may be liquid filled balls, or particles or powder materials that contain the aroma of tobacco itself or other kinds of aroma. An example of liquid filled balls is blasting beads.

Particles or powder that contain the aroma of tobacco itself are produced by applying a solvent formulated by blending Yunnan tobacco absolute, Zimbabwe tobacco absolute, Megastigmatrienone, methylcyclopentenolone, damascenone, ionone, and dihydroactinidiolide etc. to particles or powder of tobacco leaves and stems. Particles or powder that contain other aroma are produced by applying a solvent formulated by blending one or combinations of menthol essence, apple essence and rose essence etc. to particles or powder of tobacco leaves and stems.

The tobacco section 1, the multi-cavity container section 6 and the mouthpiece 4 are limited by the outer wrapping material 5. The outer wrapping material can be made by one or combinations of any suitable materials. In an embodiment, the outer wrapping material 5 is cigarette rolling paper. A downstream portion of the outer wrapping material 5 can also be limited by a cigarette tipping paper like a cork tipping paper 3. Alternatively, the shaping paper 2, the cigarette rolling paper and the cork tipping paper can be collectively considered as the outer wrapping material.

The heat-not-burn cigarette of the present invention has an outer diameter around 5mm to 10mm, specifically between around 6mm to 8mm. In a preferred embodiment, the outer diameter of the heat-not-burn cigarette is 7mm +/- 10%.

The heat-not-burn cigarette can have a total length of around 30mm to 60mm. In a preferred embodiment, the heat-not-burn cigarette has a total length of around 48mm.

FIG. 6 is an axial sectional view showing another example structure. Only the features different from the embodiment shown in FIG. 1 will be described in detail here, and features that are the same as the embodiment shown in FIG. 1 will not be repeated here. In the embodiment shown in FIG. 6, the heat-not-burn cigarette comprises a tobacco section 1, a multi-cavity container section 6 and a hollow mouthpiece 13. The hollow mouthpiece 13 is a tubular element having a through hole along an axial direction thereof. Preferably, the through hole has a diameter of 3mm. FIG. 8 shows an end surface of the hollow mouthpiece. The through hole is provided at a substantially central position of the end surface of the hollow mouthpiece. FIG. 8(a) shows an end surface 14 of the hollow mouthpiece, wherein the through hole has a circular shape. FIG. 8(b) shows an end surface 11 of the hollow mouthpiece, wherein the through hole has a toothed gear shape.

According to another embodiment of the heat-not-burn cigarette of the present invention, additional supporting sections or functional sections can be provided between the tobacco section and the multi-cavity container section and/or between the multi-cavity container section and the mouthpiece; the tobacco section, the multi-cavity container section, the mouthpiece, and all the inserted additional supporting sections or functional sections are connected end to end co-axially.

## Claims

1. A heat-not-burn cigarette, comprising a tobacco section (1), a cavity container section (6) and a mouthpiece (4) connected sequentially and co-axially, and an outer wrapping material (5) that limits the tobacco section (1), the cavity container section (6) and the mouthpiece (4); the tobacco section (1) contains smoke generation materials;
wherein the cavity container section (6) has multiple container parts, each having a cavity;
each container part has a substantially cylindrical shape, each container part has one end along an axial direction thereof being an opening, and another end along the axial direction thereof being a bottom wall or end surface, the cavity container section (6) has air holes to allow air to flow through the cavity container section (6) along a direction upstream and downstream of the heat-not-burn cigarette, the air holes are provided at two side surfaces of the multiple-cavity container section and at each wall separating two adjacent cavities;
**characterized in that** the container parts are removably connected to one another.

2. The heat-not-burn cigarette of claim 1, wherein the multiple cavities of the cavity container section (6) are filled with one or combinations of water, flavored liquids, aroma beads and cooling materials.

3. The heat-not-burn cigarette of claim 1, wherein the cavity container section (6) is made of food-grade plastics, biodegradable plastics or whole plant extract materials.

4. The heat-not-burn cigarette of claim 1, wherein the tobacco section (1) has a core and compound aluminum foil shaping paper (2) or grease proof shaping paper wrapping around the core.

5. The heat-not-burn cigarette of claim 4, wherein the compound aluminum foil shaping paper (2) has a compound layer structure, having an inner layer being aluminum foil, and an outer layer being a shaping paper; the inner layer and the outer layer are adhered together to form the compound layer structure.

6. The heat-not-burn cigarette of claim 1, wherein a core of the tobacco section (1) is produced from reconstituted tobacco leaves, native tobacco or coated paper material.

7. The heat-not-burn cigarette of claim 6, wherein the core of the tobacco section (1) is added with one or combinations of tobacco extract, granular or powder form of tobacco, and aroma essence.

8. The heat-not-burn cigarette of claim 6, wherein the core of the tobacco section (1) produced from reconstituted tobacco leaves, native tobacco or coated paper material is chopped into thin and elongated strips (8) gathered as a bundle orienting along the axial direction of the heat-not-burn cigarette.

9. The heat-not-burn cigarette of claim 1, wherein the smoke generation materials comprise polyols and a mixture thereof; the polyols comprise propylene glycol, triethylene glycol, butylene glycol, and glycerol.

10. The heat-not-burn cigarette of claim 1, wherein a core of the mouthpiece (4) is made of acetate fiber material.

11. The heat-not-burn cigarette of claim 1, wherein the mouthpiece (4) is also provided with aroma enhancement element.

12. The heat-not-burn cigarette of claim 11, wherein the aroma enhancement element is liquid filled balls, or particles or powder materials that contain the aroma of tobacco itself or other kinds of aroma.

13. The heat-not-burn cigarette of claim 1, wherein the mouthpiece (4) is solid, or a tubular element having a through hole along an axial direction thereof.

14. The heat-not-burn cigarette of claim 13, wherein the through hole of the mouthpiece (4) has a cross section of a circular shape, a toothed gear shape or other shapes.

15. The heat-not-burn cigarette of claim 1, wherein additional supporting sections or functional sections are provided between the tobacco section (1) and the cavity container section (6) and/or between the cavity container section (6) and the mouthpiece (4); the tobacco section (1), the cavity container section (6), the mouthpiece (4), and all the inserted additional supporting sections or functional sections are connected end to end co-axially.

## Patentansprüche

1. Tabakstick für Tabakerhitzer, umfassend einen Tabakteilabschnitt (1), einen Hohlraumbehälterteilabschnitt (6) und ein Mundstück (4), die nacheinander und koaxial verbunden sind, und ein äußeres Umhüllungsmaterial (5), das den Tabakteilabschnitt (1), den Hohlraumbehälterteilabschnitt (6) und das Mundstück (4) begrenzt, wobei der Tabakteilabschnitt (1) Raucherzeugungsmaterialien enthält,
wobei der Hohlraumbehälterteilabschnitt (6) mehrere Behälterteile aufweist, die jeweils einen Hohlraum aufweisen,
wobei jeder Behälterteil eine im Wesentlichen zylindrische Form aufweist, wobei jeder
Behälterteil ein Ende entlang einer axialen Richtung davon aufweist, das eine Öffnung ist, und ein anderes Ende entlang der axialen Richtung davon, das eine Bodenwand oder eine Endoberfläche ist, wobei der Hohlraumbehälterteilabschnitt (6) Luftlöcher aufweist, um zu ermöglichen, dass Luft durch den Hohlraumbehälterteilabschnitt (6) entlang einer Richtung stromaufwärts und stromabwärts des Tabaksticks für Tabakerhitzer strömt, wobei die Luftlöcher an zwei Seitenoberflächen des mehrere Hohlräume aufweisenden Behälterteilteilabschnitts und an jeder Wand, die die benachbarten Hohlräume trennt, vorgesehen sind, **dadurch gekennzeichnet, dass** die Behälterteile entfernbar miteinander verbunden sind.

2. Tabakstick für Tabakerhitzer nach Anspruch 1, wobei die mehreren Hohlräume des Hohlraumbehälterteilabschnitts (6) entweder mit Wasser, aromatisierten Flüssigkeiten, Aromaperlen oder Kühlmaterialien oder einer Kombination davon gefüllt sind.

3. Tabakstick für Tabakerhitzer nach Anspruch 1, wobei der Hohlraumbehälterteilabschnitt (6) aus lebensmittelgeeigneten Kunststoffen, biologisch abbaubaren Kunststoffen oder Materialien auf Basis von Extrakten aus ganzen Pflanzen besteht.

4. Tabakstick für Tabakerhitzer nach Anspruch 1, wobei der Tabakteilabschnitt (1) einen Kern und ein formgebendes Verbundpapier aus Aluminiumfolie (2) oder ein fettabweisendes formgebendes Papier aufweist, das den Kern umhüllt.

5. Tabakstick für Tabakerhitzer nach Anspruch 4, wobei das formgebende Verbundpapier aus Aluminiumfolie (2) eine Verbundschichtstruktur aufweist, aufweisend eine innere Schicht, bei der es sich um Aluminiumfolie handelt, und eine äußere Schicht, bei der es sich um ein formgebendes Papier handelt, wobei die innere Schicht und die äußere Schicht aneinander haften, um die Verbundschichtstruktur zu bilden.

6. Tabakstick für Tabakerhitzer nach Anspruch 1, wobei ein Kern des Tabakteilabschnitts (1) aus rekonstituierten Tabakblättern, naturbelassenem Tabak oder beschichtetem Papiermaterial hergestellt ist.

7. Tabakstick für Tabakerhitzer nach Anspruch 6, wobei dem Kern des Tabakteilabschnitts (1) einer oder eine Kombination der folgenden Stoffe hinzugefügt ist: Tabakextrakt, Tabak in Granulat- oder Pulverform und Aromastoffe.

8. Tabakstick für Tabakerhitzer nach Anspruch 6, wobei der aus rekonstituierten Tabakblättern, naturbelassenem Tabak oder beschichtetem Papiermaterial hergestellte Kern des Tabakteilabschnitts (1) in dünne und langgestreckte Streifen (8) geschnitten ist, die als Bündel zusammengefasst und entlang der axialen Richtung des Tabaksticks für Tabakerhitzer ausgerichtet sind.

9. Tabakstick für Tabakerhitzer nach Anspruch 1, wobei die Raucherzeugungsmaterialien Polyole und eine Mischung davon umfassen, wobei die Polyole Propylenglykol, Triethylenglykol, Butylenglykol und Glycerin umfassen.

10. Tabakstick für Tabakerhitzer nach Anspruch 1, wobei ein Kern des Mundstücks (4) aus Acetatfasermaterial besteht.

11. Tabakstick für Tabakerhitzer nach Anspruch 1, wobei das Mundstück (4) auch mit einem Aromaverbesserungselement versehen ist.

12. Tabakstick für Tabakerhitzer nach Anspruch 11, wobei es sich bei dem Aromaverbesserungselement um mit Flüssigkeit gefüllte Kugeln oder Partikel oder Pulvermaterialien handelt, die das Tabakaroma oder andere Arten von Aromen enthalten.

13. Tabakstick für Tabakerhitzer nach Anspruch 1, wobei das Mundstück (4) massiv oder ein rohrförmiges Element, aufweisend ein Durchgangsloch entlang einer axialen Richtung davon, ist.

14. Tabakstick für Tabakerhitzer nach Anspruch 13, wobei das Durchgangsloch des Mundstücks (4) einen Querschnitt mit einer Kreisform, einer Zahnradform oder sonstigen Formen aufweist.

15. Tabakstick für Tabakerhitzer nach Anspruch 1, wobei zusätzliche Stützteilabschnitte oder Funktionsteilabschnitte zwischen dem Tabakteilabschnitt (1) und dem Hohlraumbehälterteilabschnitt (6) und/oder zwischen dem Hohlraumbehälterteilabschnitt (6) und dem Mundstück (4) vorgesehen sind, wobei der Tabakteilabschnitt (1), der Hohlraumbehälterteilabschnitt (6), das Mundstück (4) und alle eingesetzten zusätzlichen Stützteilabschnitte oder Funktionsteilabschnitte stirnseitig koaxial verbunden sind.

## Revendications

1. Cigarette à chauffage sans combustion, comprenant une section de tabac (1), une section de récipient à cavités (6) et un embout buccal (4) reliés en séquence et de façon coaxiale, et un matériau d'emballage externe (5) qui limite la section de tabac (1), la section de récipient à cavités (6) et l'embout buccal (4) ; la section de tabac (1) contient des matières de génération de fumée ;
dans laquelle la section de récipient à cavités (6) présente des parties de récipient multiples, chacune présentant une cavité ;
chaque partie de récipient présente une forme sensiblement cylindrique, chaque
partie de récipient présente une extrémité le long d'une direction axiale de celle-ci sous la forme d'une ouverture, et une autre extrémité le long de la direction axiale de celle-ci sous la forme d'une paroi de fond ou d'une surface d'extrémité, la section de récipient à cavités (6) présente des trous d'air pour permettre à l'air de s'écouler à travers la section de récipient à cavités (6) le long d'une direction en amont et en aval de la cigarette à chauffage sans combustion, les trous d'air sont ménagés au niveau de deux surfaces latérales de la section de récipient à cavités multiples et au niveau de chaque paroi séparant deux cavités adjacentes ; **caractérisée en ce que** les parties de récipient sont reliées de manière amovible l'une à l'autre.

2. Cigarette à chauffage sans combustion selon la revendication 1, dans laquelle les multiples cavités de la section de récipient à cavités (6) sont remplies d'une ou de plusieurs combinaisons d'eau, de liquides aromatisés, de billes d'arôme et de matériaux de refroidissement.

3. Cigarette à chauffage sans combustion selon la revendication 1, dans laquelle la section de récipient à cavités (6) est constituée de plastiques de qualité alimentaire, de plastiques biodégradables ou de matières d'extrait de plante entière.

4. Cigarette à chauffage sans combustion selon la revendication 1, dans laquelle la section de tabac (1) présente un noyau et un papier de mise en forme en feuille d'aluminium composée (2) ou un papier de mise en forme étanche à la graisse enveloppant le noyau.

5. Cigarette à chauffage sans combustion selon la revendication 4, dans laquelle le papier de mise en forme en feuille d'aluminium composé (2) présente une structure en couches composée, présentant une couche interne qui est une feuille d'aluminium, et une couche externe qui est un papier de mise en forme ; la couche interne et la couche externe sont collées ensemble pour former la structure en couches composée.

6. Cigarette à chauffage sans combustion selon la revendication 1, dans laquelle un noyau de la section de tabac (1) est produit à partir de feuilles de tabac reconstitué, de tabac natif ou de matériau de papier couché.

7. Cigarette à chauffage sans combustion selon la revendication 6, dans laquelle le noyau de la section de tabac (1) est enrichi d'une ou de plusieurs combinaison(s) d'extrait de tabac, de tabac sous forme granulaire ou en poudre, et d'essence d'arôme.

8. Cigarette à chauffage sans combustion selon la revendication 6, dans laquelle le noyau de la section de tabac (1) produit à partir de feuilles de tabac reconstitué, de tabac natif ou de matériau de papier couché est haché en bandes minces et allongées (8) rassemblées sous la forme d'un ballot orienté le long de la direction axiale de la cigarette à chauffage sans combustion.

9. Cigarette à chauffage sans combustion selon la revendication 1, dans laquelle les matières de génération de fumée comprennent des polyols et un mélange de ceux-ci ; les polyols comprennent du propylène glycol, du triéthylène glycol, du butylène glycol et du glycérol.

10. Cigarette à chauffage sans combustion selon la revendication 1, dans laquelle un noyau de l'embout buccal (4) est constitué d'un matériau en fibres d'acétate.

11. Cigarette à chauffage sans combustion selon la revendication 1, dans laquelle l'embout buccal (4) est également pourvu d'un élément d'amélioration d'arôme.

12. Cigarette à chauffage sans combustion selon la revendication 11, dans laquelle l'élément d'amélioration d'arôme est constitué par des billes remplies de liquide, ou des particules ou des matériaux en poudre qui contiennent l'arôme de tabac lui-même ou d'autres genres d'arôme.

13. Cigarette à chauffage sans combustion selon la revendication 1, dans laquelle l'embout buccal (4) est plein, ou un élément tubulaire présentant un trou traversant le long d'une direction axiale de celui-ci.

14. Cigarette à chauffage sans combustion selon la revendication 13, dans laquelle le trou traversant de l'embout buccal (4) présente une section transversale de forme circulaire, de forme d'engrenage denté ou d'autres formes.

15. Cigarette à chauffage sans combustion selon la revendication 1, dans laquelle des sections de support ou des sections fonctionnelles supplémentaires sont ménagées entre la section de tabac (1) et la section de récipient à cavités (6) et/ou entre la section de récipient à cavités (6) et l'embout buccal (4) ; la section de tabac (1), la section de récipient à cavités (6), l'embout buccal (4), et toutes les sections de support ou sections fonctionnelles supplémentaires insérées sont reliées bout-à-bout de manière coaxiale.
